# EUROPÄISCHE PATENTANMELDUNG

(11) **EP 2 439 036 A1**
(43) Veröffentlichungstag der Anmeldung: **11.04.2012**
(21) Anmeldenummer: 11007937.3
(22) Anmeldetag: 29.09.2011
(51) Int. Cl.: B29C 33/12, B29D 30/06

(54) **Verfahren zum Einsetzen von Lamellenteilen in einen Formkörper zur Reifenherstellung, Formkörper mit eingesetzten Lamellenteilen und Fixierstift für Lamellenteile**

(30) Priorität: 06.10.2010 DE 102010047479
(71) Anmelder: EPS Engineering Gesellschaft für Produktentwicklung mbH, 82031 Grünwald (DE)
(72) Erfinder: Stöckl, Andreas, 82515 Wolfratshausen (DE)
(74) Vertreter: von Puttkamer · Berngruber

(57) **Zusammenfassung**

Die Erfindung betrifft ein verfahren zum Einsetzen von Lamellenteilen (1) in einen Formkörper (8) zur Reifenherstellung, wobei ein einen oberen Teilbereich (2) und einen Fußbereich (3) aufweisendes Lamellenteil (1) mit seinem Fußbereich (3) in einen Schlitz (7) des Formkörpers (8) eingesetzt wird. Es werden die folgenden Schritte ausgeführt: Herstellen einer von der Ebene (20) des Formkörpers (8) aus in den Formkörper (8) hinein verlaufenden Bohrung (9) und eines quer zur Bohrung (9) verlaufenden Schlitzes (7), Einsetzen eines konisch ausgebildeten Fixierstiftes (4) in die Bohrung (9) derart, dass der obere Endbereich des konisch ausgebildeten Fixierstiftes (4) über die obere Ebene (20) des Formkörpers hinausragt, Einsetzen des Fußbereiches (3) des Lamellenteiles (1) in einen über die Stirnseite (21) des Befestigungsschlitzes (5) des konischen Fixierstiftes (4) verlaufenden und sich in axialer Richtung des Fixierstiftes (4) in diesen hinein erstreckenden Befestigungsschlitz (5) und Ausüben eines Druckes auf das Lamellenteil (1) derart, dass der konische Fixierstift in die Bohrung (9) hineingepresst wird.

## Beschreibung

Die vorliegende Erfindung betrifft ein Verfahren zum Einsetzen von Lamellenteilen in einen Formkörper zur Reifenherstellung. Ferner betrifft die Erfindung einen Formkörper mit eingesetzten Lamellenteilen sowie einen Fixierstift für Lamellenteile.

Aus der DE 697 20 552 T2 geht ein Formkörper dieser Art hervor. Dabei besteht ein Lamellenteil aus einem Lamellenrohling, dessen Enden zumindest teilweise von Endkappen umschlossen werden. Dabei können die Endkappen beispielsweise elliptisch oder konisch ausgebildet sein. Die Endkappen können zum Beispiel durch Crimpen an dem Lamellenteil befestigt sein. Die derart mit den Endkappen versehenen Lamellenteile werden zur Profilierung des Reifens mit einem Vorsprungbereich in entsprechende Schlitze des Formkörpers eingesteckt. Es ist erkennbar, dass die Herstellung von derartigen Endkappen aufweisenden Lamellenteilen aufwändig und kostspielig ist.

Aus der DE 101 31 130 Al geht ein Formsegment einer Vulkanisationsform für Fahrzeugreifen hervor, bei dem Lamellenteile in nutförmige Ausnehmungen bzw. Schlitze eingesetzt werden, wobei die Lamellenteile jeweils an ihrem in die Ausnehmung eingesetzten Abschnitt wenigstens ein seitlich abstehendes Teilstück aufweisen. Die Teilstücke weisen zwischen dem Öffnungsmund der Ausnehmung und den dem öffnungsmund zugewandten Seiten der Teilstücke Fixierungselemente auf, die mit der Seitenwandung der Ausnehmung verschweißt sind. Die Befestigung derartiger Lamellenteile in den Ausnehmungen der Formsegmente ist ebenfalls äußerst aufwändig und kostenintensiv. Zudem ist auch die Herstellung dieser Lamellenteile selbst aufwändig und teuer.

Die Aufgabe der vorliegenden Erfindung besteht daher darin, ein Verfahren zum Befestigen von Lamellenteilen in einem Formkörper zur Herstellung von Fahrzeugreifen, insbesondere von Kfz-Reifen anzugeben, das eine äußerst effektive Fixierung der Lamellenteile in Schlitzen des Formkörpers sicherstellt und zudem relativ einfach und kostengünstig ausführbar ist. Außerdem soll aufgabengemäß ein Formkörper zur Reifenherstellung geschaffen werden, dessen Lamellenteile äußerst fest in entsprechenden Schlitzen des Formkörpers fixiert sind. Weiterhin sollen Fixierstifte zur effektiven Befestigung von Lamellenteilen in Schlitzen eines Formkörpers zur Reifenherstellung geschaffen werden.

Diese Aufgabe wird durch ein Verfahren mit den Merkmalen des Patentanspruches 1 sowie durch einen Formkörper mit den Merkmalen des Patentanspruches 6 und einen Fixierstift mit den Merkmalen des Patentanspruches 15 gelöst.

Der wesentliche Vorteil der vorliegenden Erfindung besteht darin, dass die Lamellenteile mit der Hilfe von speziellen Fixierstiften extrem fest und sicher in den entsprechenden Schlitzen eines Formkörpers befestigt werden können. Vorteilhafterweise erfolgt die Befestigung der Lamellenteile und der Fixierstifte durch relativ einfaches Eindrücken der Lamellenteile in die entsprechende Schlitze das Formkörpers, die wenigstens eine in Richtung der Schlitztiefe verlaufende Bohrung bzw. ein Loch zur Aufnahme eines Fixierstiftes enthalten.

Ein wesentlicher Vorteil der vorliegenden Erfindung ergibt sich daraus, dass die Lamellenteile beim Einsetzen in die Schlitze der Formkörper in Längsrichtung bewegbar sind, sodass eine exakte Ausrichtung in eine gewünschte Lage im Formkörper möglich ist.

Ein besonderer Vorteil der Erfindung besteht auch darin, dass zur Befestigung der Lamellenteile in den entsprechenden Schlitzen des Formkörpers keine Schweißoperationen erforderlich sind. Vorteilhafterweise kann das Einsetzen der Lamellenteile äußerst einfach, schnell und kostengünstig erfolgen.

Das erfindungsgemäße Verfahren zum Einsetzen von Lamellenteilen in einen Formkörper zur Reifenherstellung, bei dem ein einen oberen Teilbereich und einen Fußbereich aufweisendes Lamellenteil mit seinem Fußbereich in einen Schlitz des Formkörpers eingesetzt wird, umfasst die folgenden Schritte: Nach dem Herstellen, vorzugsweise dem Fräsen, des Schlitzes und dem Herstellen einer Bohrung in dem Formkörper: Einsetzen eines konisch ausgebildeten Fixierstiftes in die von der oberen Ebene des Formkörpers ausgehende und in den Formkörper hinein verlaufende Bohrung derart, dass der obere Endbereich des konisch ausgebildeten Fixierstiftes über die genannte Ebene des Formkörpers hinausragt, Einsetzen des Fußbereiches des Lamellenteiles in den Befestigungsschlitz des Fixierstiftes und Ausüben eines Druckes auf das Lamellenteil, derart, dass der konische Fixierstift in die Bohrung und der Fußbereich des Lamellenteiles in den Schlitz eingepresst werden, wobei der Fixierstift an der Innenwandung der Bohrung verkeilt wird und die Randbereiche des Befestigungsschlitzes des oberen Endbereiches des Fixierstiftes gegen das Fußteil gepresst und an diesem fixiert werden.

Wenn insbesondere relativ lange geradlinige Lamellenteile oder bogenförmige oder zickzackförmige Lamellenteile zur Anwendung gelangen, kann es besonders vorteilhaft sein, entlang der Schlitzes des Formkörpers voneinander beabstandet mehrere Bohrungen einzubringen, in die jeweils Fixierstifte zur Befestigung des jeweiligen Fußteiles eines Lamellenteiles eingebracht werden. Dadurch ergeben sich besonders feste Verbindungen zwischen dem Formkörper und den Lamellenteilen.

Besonders vorteilhaft ist eine Ausführungsform des erfindungsgemäßen Verfahrens, wenn die Länge bzw. Tiefe des Befestigungsschlitzes in seiner axialen Richtung gesehen so bemessen wird, dass im Montagezustand des Lamellenteiles der untere Rand des über den Schlitz überstehenden Teilbereiches des Lamellenteiles exakt in der Ebene des Formkörpers liegt, sodass sich nach dem Einpressen des Fixierstiftes in die Bohrung die Stirnseite des oberen Endbereiches des Fixierstiftes exakt in die Ebene des Randbereiches des Schlitzes des Formkörpers befindet. Auf diese Weise wird beim Vulkanisieren verhindert, dass Gummimaterial in eine eventuelle Vertiefung zwischen der Bohrung des Formkörpers und der Stirnseite des Fixierstiftes eindringen kann. Anders ausgedrückt ist die zuvor genannte Länge des Befestigungsschlitzes so bemessen, dass sie dem Abstand zwischen dem unteren Rand des Fußbereiches, der im Montagezustand am Boden des Befestigungsschlitzes aufliegt, und dem unteren Rand des oberen Teilbereiches des Lamellenteiles entspricht, der im Montagezustand in der Ebene des Randbereiches des Schlitzes Formkörpers liegt.

Die Erfindung betrifft auch einen Formkörper zur Reifenherstellung mit in Schlitze des Formkörpers eingesetzten Lamellenteilen, wobei ausgehend von der der oberen Ebene des Formkörpers Bohrungen jeweils in das Innere des Formkörpers hinein verlaufen, deren Durchmesser jeweils größer ist als die Dicke der Fußteile der Lamellenteile, wobei in die Bohrungen jeweils ein konischer Fixierstift, der in seinem Endbereich einen in der Richtung eines Durchmessers des Fixierstiftes verlaufenden Befestigungsschlitz aufweist, eingesetzt ist, wobei in den Befestigungsschlitz der Fußbereich des in den Schlitz des Formkörpers eingesetzten Fußteiles derart eingesetzt ist, dass der Umfang des Fixierstiftes durch das Einpressen in die Bohrung fest an der Innenwandung der Bohrung fixiert ist und die Randbereiche des Befestigungsschlitzes fest gegen die Seitenflächen des Fußteiles gepresst sind.

Besonders vorteilhaft ist es aus den oben genannten Gründen, wenn die Länge des Befestigungsschlitzes in seiner axialen Richtung gesehen so bemessen ist, dass der untere Rand des über den Schlitz überstehenden Teilbereiches des Lamellenteiles exakt in der Ebene des Formkörpers liegt und die Stirnseite des oberen Endbereiches des Fixierstiftes nach dem Einpressen exakt in die Ebene des Randbereiches des Schlitzes des Formkörpers liegt. Die Breite der Befestigungsschlitzes der Fixierstifte ist zweckmäßigerweise jeweils geringfügig größer gewählt als die Dicke des jeweiligen Fußbereiches des Lamellenteiles. Der Fixierstift kann zur Erzielung einer besonders festen mechanischen Verbindung entlang seiner Länge voneinander beabstandete, über seinen Umfang vorstehende Vorsprungelemente aufweisen, die fest an der Innenwandung der Bohrung anliegen. Diese Vorsprungelemente weisen zwecknäßigerweise die Form von entlang des Umfanges des Fixierstiftes verlaufenden Rippen auf. Je nach den für das Reifenprofil bestehenden Anforderungen können die Schlitze des Formteiles und die Fußbereiche des Lamellenteiles geradlinig, bogenförmig oder zickzackförmig verlaufen. Entlang der Länge von Fußteilen von Lamellenteilen können zur besonders festen mechanischen Fixierung der Lamellenteile entlang der Schlitze des Formteiles mehrere Bohrungen vorgesehen sein, in die jeweils Fixierstifte eingesetzt sind.

Die Erfindung betrifft auch Fixierstifte zur Befestigung von Fußteilen von Lamellenteilen in Schlitzen eines Formkörpers. Dabei sind die Fixierstifte konisch ausgebildet. Sie weisen in ihren oberen Endbereichen mit dem größeren Durchmesser jeweils einen in der Richtung eines Durchmessers des Fixierstiftes verlaufenden Befestigungsschlitz auf, in den der Fußbereich eines Lamellenteiles einsetzbar ist. Dabei ist die Breite des Befestigungsschlitzes vorzugsweise geringfügig größer als die Dicke des Fußbereiches des Lamellenteiles.

Im Folgenden werden die Erfindung und deren Ausgestaltungen im Zusammenhang mit den Figuren näher erläutert. Es zeigen:
Figur 1 eine Seitenansicht einer beispielhaften Ausführungsform eines Lamellenteiles,
Figuren 2a und 3a die Seitenansichten bevorzugter Ausgestaltungen eines Fixierstiftes,
Figuren 2b und 3b die Fixierstifte der Figuren 2a bzw. 2b in perspektivischen Darstellungen,
Figur 4 eine Ansicht von oben auf ein Lamellenteil, das mit der Hilfe eines Fixierstiftes in einen Schlitz eines Formkörpers eingesetzt ist,
Figuren 5 bis 6a, 6b und 7a, 7b Darstellungen zur Erläuterung der einzelnen Schritte des erfindungsgemäßen Verfahrens, wobei die jeweils linke Figur in Bezug auf die zugeordnete rechte Figur um 90° verdreht ist, und
Figuren 8 und 9 Weiterbildungen der Erfindung.

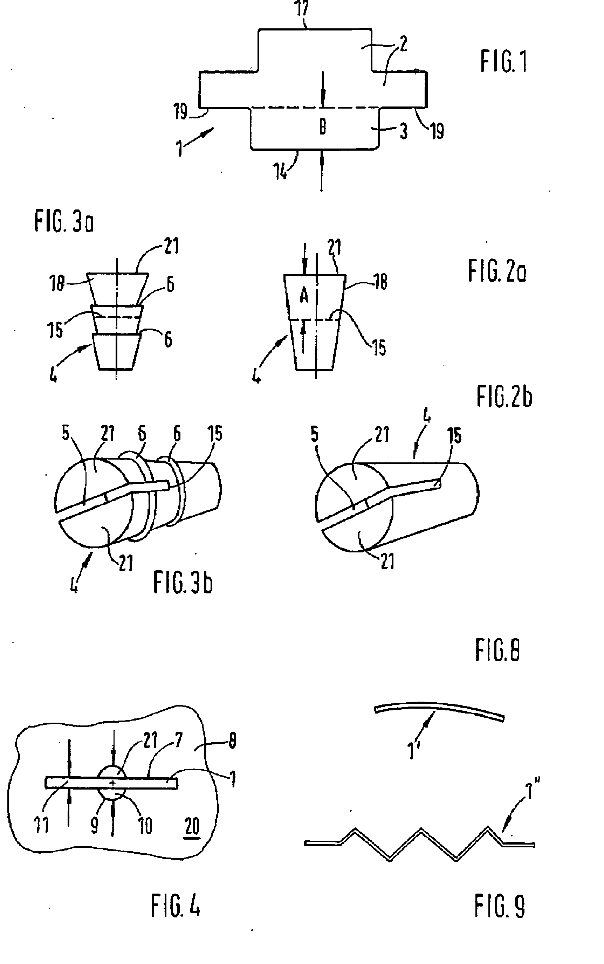

In der Figur 1 ist ein beispielhaft ausgestaltetes Lamellenteil mit 1 bezeichnet. Im Wesentlichen umfasst das Lamellenteil 1 einen oberen Teilbereich 2, der dann, wenn das Lamellenteil 1 in einem Formkörper montiert ist, über den entsprechenden Schlitz des Formkörpers hinausragt. Ferner umfasst das Lamellenteil 1 einen unteren Fußbereich 3, der dann, wenn das Lamellenteil 1 in einem Schlitz des Formkörpers montiert ist, in den Schlitz eingreift und in diesem befestigt bzw. fixiert ist.

Zur Befestigung des Lamellenteils 1 in einem Schlitz des Formkörpers dienende Ausführungsformen von Fixierstiften sind in den Figuren 2a, 3a und 2b, 3b mit 4 bezeichnet. In seiner einfachsten Form weist der Fixierstift 4 gemäß den Figuren 2a, 2b eine konische Form auf, wobei in dem oberen Endbereich 18 mit dem größeren Durchmesser ein Befestigungsschlitz 5 eingebracht ist. Der Befestigungsschlitz 5 verläuft vorzugsweise in der Richtung eines Durchmessers des Fixierstiftes 4. Die Breite des Befestigungsschlitzes 5 ist geringfügig größer als die Dicke des Fußbereiches 3 des Lamellenteiles 1.

Um eine besonders günstige und effektive Klemmwirkung des Fixierstiftes 4 zu erreichen, kann dieser gemäß den Figuren 2b und 3b in der Richtung seiner Längsachse voneinander beabstandete ringförmige Vorsprünge bzw. Rippen 6 aufweisen, die sich beim Einschlagen bzw. Einpressen des Fixierstiftes 4 in eine zylindrische Bohrung des Formkörpers an der Innenwandung der Bohrung verklemmen bzw. verkrallen. Andere Klemmelemente sind denkbar.

Die Länge A (Figur 2a) des Befestigungsschlitzes 5 in seiner axialen Richtung gesehen sowie der Abstand B (Figur 1) zwischen dem unteren Rand 14 des Fußteiles 3 und dem unteren Rand 19 des seitlich über den Fußbereich 3 vorstehenden oberen Teilbereiches 2 sind vorzugsweise gleich bemessen, sodass im Montagezustand des Lamellenteiles 1, wenn der untere Rand 19 des über den Schlitz 7 überstehenden oberen Teilbereiches 2 des Lamellenteiles 1 in der Ebene des Formkörpers liegt, die Stirnseite 21 des oberen Endbereiches 18 des Fixierstiftes 4 exakt in die Ebene des Randbereiches des Schlitzes 7 des Formkörpers gelangt.

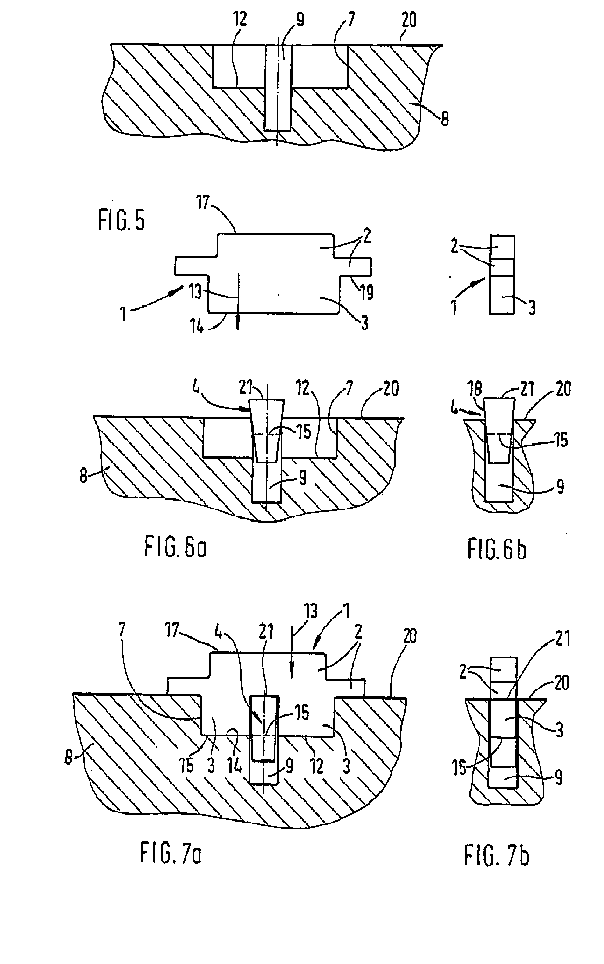

Im Folgenden wird im Zusammenhang mit den Figuren 5 bis 7 das erfindungsgemäße Verfahren zur Befestigung eines Lamellenteiles 1 in einem Schlitz 7 eines Formkörpers 8 näher erläutert. An wenigstens einem Ort des Schlitzes 7 oder an mehreren in der Längsrichtung des Schlitzes 7 voneinander beabstandeten Orten ist eine Bohrung 9 vorgesehen, deren Durchmesser 10 größer ist als die Breite 11 des Schlitzes 7 (siehe Figur 4), wobei sich die Bohrung 9 ausgehend von der Oberfläche bzw. Ebene 20 des Formkörpers 8 über die Bodenwand 12 des Schlitzes 7 hinaus in den Formkörper 8 hinein erstreckt und vorzugsweise senkrecht zur Längserstreckung des Schlitzes 7 verläuft.

Zur Befestigung eines Lamellenteiles 1 in dem Schlitz 7 des Formkörpers B wird gemäß Figur 6 ein Fixierstift 4 von oben her mit seinem kleineren Endbereich voran in eine Bohrung 9 eingesetzt. In der erkennbaren Weise ragt der konische Fixierstift 4 mit seinem größeren, oberen Endbereich 18 über die Ebene 20 des Randbereiches des Schlitzes 7 hinaus. Die obere Stirnfläche des Fixierstiftes 4 ist mit 21 bezeichnet.

Anschließend wird von außen her der Fußbereich 3 eines Lamellenteiles 1 in den Befestigungsschlitz 5 des zum Schlitz 7 ausgerichteten Fixierstiftes 4 eingesetzt und durch Aufbringen einer Kraft in der Richtung des Pfeiles 13 auf den oberen Teilbereich 2 gemäß den Figuren 7a, 7b in den Schlitz 7 eingedrückt bzw. eingeschlagen, bis der untere Rand 19 des Teilbereiches 2 des Lamellenteiles 1 Fußbereiches 3 an dem Randbereich des Schlitzes 7 anliegt. Dabei wird, weil der untere Rand 14 des Fußteiles 3 am Boden 15 des Befestigungsschlitzes 5 anliegt, der konische Fixierstift 4 in die zylindrische Bohrung 9 eingepresst und in dieser festgehalten. Da gleichzeitig der über die Bohrung 9 hinausragende konische Endbereich 18 des Fixierstiftes 4 in die Bohrung 9 hineingedrückt wird, bis der in den Befestigungsschlitz 5 eingeführte untere Rand 19 in der Ebene 20 des Randbereiches des Schlitzes 7 liegt, wird beim Einpressen des oberen konischen Endbereiches 18 des Fixierstiftes 4 in die zylindrische Bohrung 9 eine Kraft erzeugt, die den oberen Endbereich 18 des Fixierstiftes 4 radial nach innen, fest gegen den Fußbereich 3 des Lamellenteiles 1 presst. Außerdem wird dabei der in die zylindrische Bohrung 9 eindringende konische Bereich des Fixierstiftes 4 fest gegen die Innenwandung der Bohrung 9 gedrückt. Bei beiden Vorgängen wird der Fixierstift 4 formverändernd gestaucht. Dies bedeutet, dass das gemäß den Figuren 7a, 7b montierte Lamellenteil 1, dessen unterer Rand 14 des Fußteiles 3 am Boden 15 des Befestigungsschlitzes 5 anliegt, in dem Schlitz 7 fest fixiert ist. Bedarfsweise kann der Fußbereich 3 zusätzlich durch eine Klebeoperation im Schlitz 7 noch fester fixiert werden.

Durch die oben beschriebene, bevorzugte Bemessung der Länge des Befestigungsschlitzes 5 derart, dass im Montagezustand des Lamellenteiles 1 die obere Stirnseite 21 des Fixierstiftes 4 gemäß den Figuren 7a und 7b exakt in der Ebene 20 des Randbereiches des Schlitzes 7 des Formkörpers 8 liegt, wird bewirkt, dass im Bereich des Fixierstiftes 4 keine Vertiefung vorhanden ist, in die beim späteren Vulkanisieren Gummimaterial eindringen könnte. Eine solche Vertiefung würde entstehen, wenn die Stirnseite 21 des Fixierstiftes 4 tiefer liegen würde als die Ebene 20 des Randbereiches des Schlitzes 7.

Das Eindrücken des Lamellenteiles 1 in der Richtung des Pfeiles 13 der Figuren 7a, 7b wird beispielsweise dadurch bewirkt, dass mit der Hilfe eines geeigneten Schlagwerkzeuges fest gegen den oberen Rand 17 des Lamellenteiles 1 geschlagen wird.

Die Figur 4 zeigt das in dem Schlitz 7 des Formkörpers 8 montierte Lamellenteil 1 von oben.

Die Figuren 8 und 9 zeigen, dass die Lamellenteile in Längsrichtung gesehen nicht geradlinig verlaufen müssen. Die Figur 8 zeigt von oben gesehen die beispielhafte Ausgestaltung eines bogenförmig verlaufenden Lamellenteiles 1', während die Figur 9 beispielhaft, ebenfalls von oben gesehen, ein zickzackförmig verlaufendes Lamellenteil 1" zeigt. In jedem Fall sind die Schlitze 7 der Formkörper 8 an die Formen und Dicken der Fußbereiche der Lamellenteile 1' bzw. 1" angepasst. Bei diesen Ausführungsformen der Lamellenteile 1', 1" ist es besonders vorteilhaft mehrere, voneinander beabstandete Fixierstifte 7 vorzusehen, die in entsprechende Bohrungen 9 des jeweiligen Schlitzes 7 des Formkörpers 8 eingreifen.

Dadurch, dass die Länge eines geradlinigen bzw. ebenen Fußbereiches 3 kleiner bemessen wird als die Länge des Schlitzes 7, kann die Lage des Lamellenteiles 1 in dem Schlitz 7 vor seiner Montage durch Verschieben bedarfsweise variiert werden.

### Bezugszeichen

- 1: Lamellenteile
- 1': Lamellenteil
- 1": Lamellenteil
- 2: Oberer Teilbereich
- 3: Fußbereich
- 4: Fixierstift
- 5: Befestigungsschlitz
- 6: Rippe
- 7: Schlitz
- 8: Formkörper
- 9: Bohrung
- 10: Durchmesser
- 11: Breite
- 12: Bodenwand
- 13: Pfeil
- 14: unterer Rand
- 15: Boden
- 16: Pfeil
- 17: oberer Rand
- 18: Endbereich
- 19: Rand
- 20: Ebene
- 21: Stirnseite

## Patentansprüche

1. Verfahren zum Einsetzen von Lamellenteilen (1) in einen Formkörper (8) zur Reifenherstellung, wobei ein einen oberen Teilbereich (2) und einen Fußbereich (3) aufweisendes Lamellenteil (1) mit seinem Fußbereich (3) in einen Schlitz (7) des Formkörpers (8) eingesetzt wird, **gekennzeichnet durch** die folgenden Schritte:
a) Herstellen einer von der Ebene (20) des Formkörpers (8) aus in den Formkörper (8) hinein verlaufenden Bohrung (9) und eines quer zur Bohrung (9) verlaufenden Schlitzes (7),
b) Einsetzen eines konisch ausgebildeten Fixierstiftes (4) in die Bohrung (9) derart, dass der obere Endbereich des konisch ausgebildeten Fixierstiftes (4) über die obere Ebene (20) des Formkörpers hinausragt,
c) Einsetzen des Fußbereiches (3) des Lamellenteiles (1) in einen über die Stirnseite (21) des Befestigungsschlitzes (5) des konischen Fixierstiftes (4) verlaufenden und sich in axialer Richtung des Fixierstiftes (4) in diesen hinein erstreckenden Befestigungsschlitz (5) und
d) Ausüben eines Druckes auf das Lamellenteil (1) derart, dass der konische Fixierstift (4) in die Bohrung (9) hineingepresst wird bis seitlich über den Fußbereich (3) vorstehende Bereiche des Teilbereiches (2) des Lamellenteiles (1) an dem Randbereich des Schlitzes (7) anliegen, wobei der konische Fixierstift (4) an der Innenwandung der Bohrung (8) verklemmt wird und die Randbereiche des Befestigungsschlitzes (5) des oberen Endbereiches des Fixierstiftes (4) gegen das Fußteil (3) gepresst und an diesem fixiert werden.

2. Verfahren nach Anspruch 1, **dadurch gekennzeichnet, dass** entlang des Schlitzes (7) des Formkörpers (8) voneinander beabstandet mehrere Bohrungen (9) eingebracht werden, in die jeweils Fixierstifte (4) zur Befestigung des Fußteiles (3) des Lamellenteiles (1) eingebracht werden.

3. Verfahren nach Anspruch 1 oder 2, **dadurch gekennzeichnet, dass** die Länge (A) des Befestigungsschlitzes (4) in seiner axialen Richtung gesehen gleich bemessen wird, wie der Abstand (B) zwischen dem unteren Rand (19) des über den Fußbereich (3) seitlich vorsehenden oberen Teilbereiches (2) und dem unteren Rand (14) des Fußbereiches (3), sodass im Montagezustand des Lamellenteiles (1), wenn der untere Rand (19) des oberen Teilbereiches (2) des Lamellenteiles (1) exakt in der Ebene (20) des Randbereiches des Schlitzes (7) liegt, die Stirnseite (21) des oberen Endbereiches (18) des Fixierstiftes (4) ebenfalls exakt in der oberen Ebene (20) liegt.

4. Verfahren nach einem der Ansprüche 1 bis 3, **dadurch gekennzeichnet, dass** der Schlitz (7) in dem Formkörper (8) durch Fräsen hergestellt wird.

5. Formkörper zur Reifenherstellung mit in Schlitze (7) des Formkörpers (8) nach dem Verfahren nach einem der Ansprüche 1 bis 4, eingesetzten Lamellenteilen (1) **dadurch gekennzeichnet, dass** ausgehend von der Ebene (20) des Formkörpers (8) Schlitze (7) in den Formkörper (8) hinein verlaufen, dass die Schlitze (7) quer zu Bohrungen (9) verlaufen, die ebenfalls von der Ebene (20) des Formkörpers (8) in den Formkörper (8) hinein verlaufen, dass der Durchmesser (10) der Bohrungen (9) jeweils größer ist als die Breite (11) der Schlitze (7), dass in die Bohrungen (9) jeweils ein konischer Fixierstift (4) eingesetzt ist, der in seinem Endbereich (18) einen in der Richtung des Durchmessers des Fixierstiftes (4) verlaufenden und sich axial in der Richtung des Fixierstiftes (4) erstreckenden Befestigungsschlitz (5) aufweist, in dem der Fußbereich (3) des in den Schlitz (7) des Formkörpers (8) eingepressten Fußteiles (3) eingesetzt ist, wobei der Umfang des Fixierstiftes (4) durch das Einpressen in die Bohrung (9) fest an der Innenwandung der Bohrung (9) fixiert ist und die Randbereiche des Befestigungsschlitzes (5) fest gegen die Seitenflächen des Fußteiles (3) gepresst sind.

6. Formkörper nach Anspruch 5, **dadurch gekennzeichnet, dass** jeweils die Länge (A) des Befestigungsschlitzes (5) in seiner axialen Richtung gesehen so bemessen ist, wie der Abstand (B) zwischen dem unteren Rand (19) des über den Fußbereich (3) seitlich vorsehenden oberen Teilbereiches (2) und dem unteren Rand (14) des Fußbereiches (3), sodass im Montagezustand des Lamellenteiles (1), wenn der untere Rand (19) des oberen Teilbereiches (2) des Lamellenteiles (1) exakt in der Ebene (20) des Randbereiches des Schlitzes (7) liegt, die Stirnseite (21) des oberen Endbereiches (18) des Fixierstiftes (4) ebenfalls exakt in der Ebene (20) liegt.

7. Formkörper nach Anspruch 5 oder 6, **dadurch gekennzeichnet, dass** die Breite des Befestigungsschlitzes (5) des Fixierstiftes (4) geringfügig größer gewählt ist als die Dicke des Fußbereiches (3) des Lamellenteiles (1).

8. Formkörper nach einem der Ansprüche 5 bis 7, **dadurch gekennzeichnet, dass** der Fixierstift (4) entlang seiner Länge voneinander beabstandete, über seinen Umfang vorstehende Vorsprungelemente (6) aufweist, die fest an der Innenwandung der Bohrung. (9) anliegen.

9. Formkörper nach Anspruch 8, **dadurch gekennzeichnet, dass** die Vorsprungelemente (6) die Form von entlang des Umfanges des Fixierstiftes (4) verlaufenden Rippen (6) aufweisen.

10. Formkörper nach einem der Ansprüche 5 bis 9, **dadurch gekennzeichnet, dass** Schlitze (7) und Fußbereiche (3) des Lamellenteiles (1) geradlinig verlaufen.

11. Formkörper nach einem der Ansprüche 5 bis 9, **dadurch gekennzeichnet, dass** die Längen von Fußbereichen (3) kleiner bemessen sind, als die Längen der jeweils zugeordneten Schlitze (7).

12. Formkörper nach einem der Ansprüche 5 bis 9, **dadurch gekennzeichnet, dass** Schlitze (7) des Formteiles (8) und Fußbereiche (3) des Lamellenteiles (1') bogenförmig verlaufen.

13. Formkörper nach einem der Ansprüche 5 bis 9, **dadurch gekennzeichnet, dass** Schlitze (7) des Formteiles (8) und Fußbereiche (3) des Lamellenteiles (1") zickzackförmig verlaufen.

14. Formkörper nach einem der Ansprüche 5 bis 13, **dadurch gekennzeichnet, dass** entlang der Länge von Fußteilen (3) von Lamellenteiles (1, 1', 1") mehrere Bohrungen (9) vorgesehen sind, in die jeweils Fixierstifte (4) eingesetzt sind.

15. Fixierstift zur Befestigung eines Fußteiles (3) eines Lamellenteiles (1) in einem Schlitz (7) eines Formkörpers (8), **dadurch gekennzeichnet, dass** er konisch ausgebildet ist und in seinem oberen Endbereich (18) mit dem größeren Durchmesser einen in der Richtung des Durchmessers des Fixierstiftes (4) verlaufenden Befestigungsschlitz (5) aufweist, in das der Fußbereich (3) eines Lamellenteiles (1) einsetzbar ist.

16. Fixierstift nach Anspruch 15, **dadurch gekennzeichnet, dass** die Breite des Befestigungsschlitzes (5) geringfügig größer ist als die Dicke des Fußbereiches (3) des Lamellenteiles (1).

17. Fixierstift nach Anspruch 15 oder 16, **dadurch gekennzeichnet, dass** die in axialer Richtung des Fixierstiftes (4) von der Stirnseite (21) des Endbereiches (18) des Fixierstiftes (4) her gesehene Länge (A) des Befestigungsschlitzes (5) exakt dem Abstand zwischen dem dem Fixierstift (4) zugewandten unteren Rand (19) des über den Fußbereich (3) seitlich vorstehenden Teilbereiches (2) eines Lamellenteiles (1) und dem dem Fixierstift (4) zugewandten unteren Rand (14) des Fußbereiches (3) des Lamellenteiles (1) entspricht.
